# EUROPEAN PATENT APPLICATION

(11) **EP 3 059 685 A1**
(43) Date of publication of application: **24.08.2016**
(21) Application number: 15177524.4
(22) Date of filing: 20.07.2015
(51) Int. Cl.: G06F 17/50, H05K 3/00, H05K 1/02

(54) **PRINTED CIRCUIT BOARD DESIGN DEVICE**

(30) Priority: 23.02.2015 KR 20150025027
(71) Applicant: LSIS Co., Ltd., Anyang-si, Gyeonggi-do 431-848 (KR)
(72) Inventor: SUN, Jong In, 431-848 Anyang-si, Gyeonggi-do (KR)
(74) Representative: Lang, Johannes

(57) **Abstract**

A printed circuit board (PCB) design device is provided for designing a PCB of an electronic device. The PCB design device includes a communication unit transmitting and receiving circuit design information, a user input unit receiving a user input for a PCB pattern or arrangement of components included in the electronic device on the basis of the circuit design information, and a controller simulating electromagnetic interference (EMI) on the basis of the user input.

## Description

### BACKGROUND

The present disclosure relates to a printed circuit board design device.

A printed circuit board (PCB) is to print a circuit on a board without using wires to convey electricity at the time of connecting circuits between components of an electronic product. Many electronic products are made by using PCBs.

Manufacturing a PCB passes through the following process. First, a copper foil is attached to a thin circuit board made of an epoxy resin or a bakelite resin, which is an insulator, and then resist is printed on interconnections desired to remain as the copper foil. In addition, the printed board is immersed in an etching solution capable of melting down copper to melt down a portion on which the resist is not coated. Then, the copper foil remains in a desired type when the resist is removed. Then, holes are bored through portions in which components are put and blue lead resist is printed on portions on which the lead should not be coated.

For the PCB manufactured in this way, an electromagnetic compatibility (EMC) test is performed based on electromagnetic interference (EMI). This is attributed to controversy on a harmful effect of an electromagnetic wave and dangerousness of surrounding electronic devices' malfunctions due to EMI. In particular, interests are increased in noise reduction technology in terms of the EMI according to high electrical usage characteristics of electronic devices of the electric vehicles. However, when not passing such an EMI test, a PCB is required to be newly designed and manufactured again. Such a procedure requires a lot of time and expense since the above-described PCB manufacturing process is all performed. Accordingly, a device capable of efficiently designing a PCB and an EMI test process are necessary.

### SUMMARY

Embodiments provide a PCB design device by which a PCB is efficiently designed.

In one embodiment, a printed circuit board (PCB) design device for designing a PCB of an electronic device is disclosed. The PCB design device includes: a communication unit transmitting and receiving circuit design information; a user input unit receiving a user input for a PCB pattern or arrangement of components included in the electronic device on the basis of the circuit design information; and a controller simulating electromagnetic interference (EMI) on the basis of the user input.

The controller may suggest an EMI-suppressible design change of the PCB suppressing EMI generation on the basis of the EMI simulation result.

The controller may suggest the EMI-suppressible design change of the PCB through at least any one from among a distance adjustment between components included in the electronic device, a ground change, and suggestion of another component replaceable for a currently used component.

The controller may perform the EMI simulation on the basis of at least any one of a gradual variation of frequency, a resonance frequency of the PCB, and a DC IR-drop.

The PCB design device may further include a display unit displaying an EMI simulation result in a color varying according to an EMI value.

The controller may perform the EMI simulation on the basis of a type of a component included in the electronic device, a material of the component included in the electronic device, and a parasitic element and electron spin resonance of the component included in the electronic device.

In another embodiment, a method of operating a printed circuit board (PCB) design device for designing a PCB of an electronic device is disclosed. The method includes: receiving circuit design information; receiving a user input for a PCB pattern or an arrangement of components in the electronic device on a basis of the circuit design information; and simulating electromagnetic interference (EMI) on the basis of the user input.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a PCB design device according to an embodiment.
Fig, 2 is a flowchart illustrating a process of designing and testing a PCB according to an embodiment.
Fig. 3 is a flowchart illustrating an operation of a PCB design device according to an embodiment.
Fig. 4 is a flowchart illustrating an operation of a PCB design device according to another embodiment.

### DETAILED DESCRIPTION OF THE EMBODIMENTS

Reference will now be made in detail to the embodiments of the present disclosure, examples of which are illustrated in the accompanying drawings.

A printed circuit board design device according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

Hereinafter, embodiments of the present invention will be described in detail with reference to the accompanying drawings so that the present invention can be easily realized by those skilled in the art. The present invention can be practiced in various ways and is not limited to the embodiments described herein. In the drawings, parts which are not related to the description are omitted to clearly set forth the present invention and similar elements are denoted by similar reference symbols throughout the specification.

In addition, when an element is referred to as "comprising" or "including" a component, it does not preclude another component but may further include the other component unless the context clearly indicates otherwise.

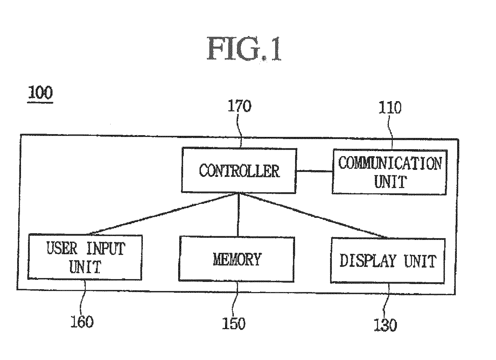

Fig. 1 is a block diagram of a PCB design device according to an embodiment.

A PCB design device 100 according to an embodiment includes a communication unit 110, a display unit 130, a memory 150, and a controller 170.

The communication unit 110 receives circuit design information and transmits a PCB blueprint.

The display unit 130 displays information necessary for the PCB design and the generated PCB blueprint.

The memory 150 stores the information necessary for the PCB design. In detail, the memory 150 may store circuit design information. The memory 150 may also store the generated PCB blueprint.

A user input unit 160 receives a user input from a user.

The controller 170 controls the communication unit 110, the display unit 130, and the memory 150. In addition, the controller 160 may calculate and process the information necessary for PCB design.

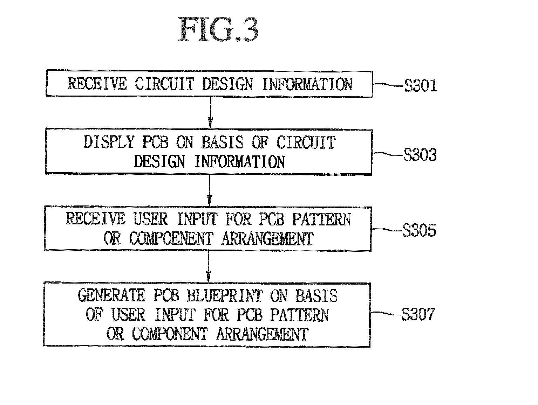

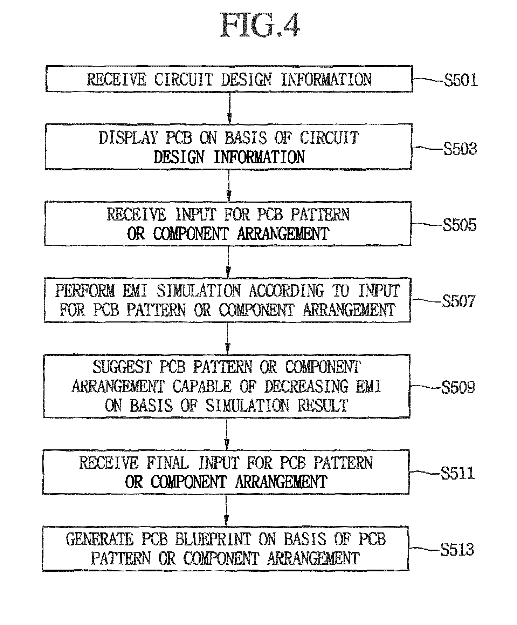

A detailed operation of the PCB design device 100 is provided with reference to Figs. 3 and 4.

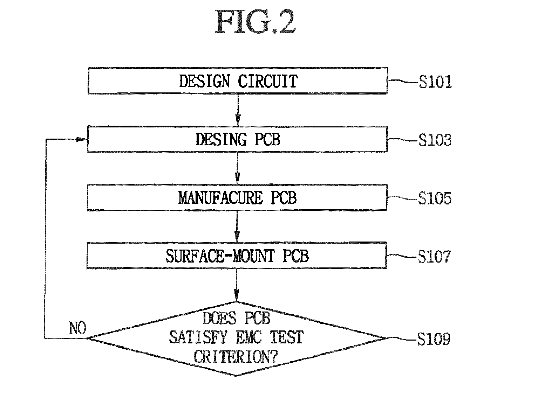

Fig. 2 is a flowchart illustrating a process of designing and testing a PCB according to an embodiment.

The user designs a circuit of an electronic device that is a design target by using a circuit design device (operation S101). At this point, in a detailed embodiment, the circuit design device may be a computer aid design (CAD) device.

The user designs a PCB on the basis of information on the designed circuit (operation S103). In detail, the user may design component arrangement on the PCB and a PCB pattern connecting the components on the basis of a blueprint or circuit information.

The user manufactures a PCB according to the generated PCB blueprint (operation S105). The user manufactures the PCB according to the PCB manufacturing procedure as described above.

The user mounts components of the electronic device in the manufactured PCB (operation S107).

The user determines whether the PCB satisfies an EMC test criterion (operation S109). At this point, the EMC test criterion may comply with a standard specification of each country. In addition, in a detailed embodiment, the EMC test criterion may be differed according to a design target electronic device. In detail, the user measures electromagnetic interference EMI) generated from the PCB at the time of driving the electronic device. When the measured electronic noise exceeds a reference value corresponding to the electronic device, the user designs the PCB again. This is because the electronic noise is differently generated according to the arrangement of electronic components on the PCB and the PCB pattern connecting the components. A detailed description will be provided about an operation of the PCB design device 100 at the time of designing a PCB with reference to Fig. 3.

Fig. 3 is a flowchart illustrating an operation of a PCB design device according to an embodiment.

The PCB design device 100 receives circuit design information through the communication unit 110 (operation S301). In detail, the PCB design device 100 may receive the circuit design information from the circuit design device through the communication unit 110. At this point, the circuit design information may include information on electronic components included in a circuit and connection relations between components.

The PCB design device 100 displays a PCB on the basis of the circuit design information through the communication unit 130 (operation S303). The user may figure out components to be included in the PCB and connection relations thereof through the PCB displayed by the PCB design device 100.

The PCB design device 100 receives a user input for the PCB pattern or component arrangement through the user input unit 160 (operation S305). Through this, the user PCB pattern or an arrangement of components to be arranged on the PCB may be adjusted.

The PCB design device 100 generates a PCB blueprint based on the user input for the PCB pattern or the component arrangement (operation S307).

However, in a case where a PCB is designed through such an operation, as described above, when the PCB does not satisfy the EMC test criterion, it is necessary to design and manufacture the PCB again. Such a process costs an additional expense and a manufacturing schedule is delayed. In addition, when the re-manufactured PCB does not satisfy the EMC test criterion, it is necessary to repeat the process for designing and manufacturing the PCB. Accordingly, a PCB design method and device capable of minimizing repetitive processes of the EMC test and PCB redesign are required.

Fig. 4 is a flowchart illustrating an operation of a PCB design device according to another embodiment.

The PCB design device 100 receives circuit design information through the communication unit 110 (operation S501). In detail, the PCB design device 100 may receive the circuit design information from the circuit design device through the communication unit 110. At this point, the circuit design information may include information on electronic components included in a circuit and connection relations between the components. In detail, the circuit design information may include types of components included in an electronic device, distances between the components, materials of the components, and parasite elements and electron spin resonance of the components.

The PCB design device 100 displays a PCB on the basis of the circuit design information through the communication unit 130 (operation S503). The user may figure out components to be included in the PCB and connection relations thereof through the PCB displayed by the PCG design device 100.

The PCB design device 100 receives a user input for the PCB pattern or component arrangement through the user input unit 160 (operation S505). Through this, the user PCB pattern or an arrangement of components to be arranged on the PCB may be adjusted.

The PCB design device 100 performs an EMI simulation on the basis of a user input for the PCB pattern or component arrangement through the controller 170. At this point, the PCB design device 100 may perform the EMI simulation on the basis of information on a tendency of EMI generation according to the PCB pattern and component arrangement. In detail, the PCB design device 100 may simulate the EMI generation on the basis of a gradual frequency change. In addition, the PCB design device 100 may simulate the EMI generation on the basis of a resonant frequency of the PCB. In addition, the PCB design device 100 may simulate the EMI generation on the basis of near/far direct current DC IR drop. In addition, the PCB design device 100 may perform the EMI simulation on the basis of types of components included in an electronic device, distances between the components, materials of the components, parasite elements and electron spin resonance of the components. To this end, the PCB design device 100 may extract from the circuit design information the types of components included in an electronic device, distances between the components, materials of the components, and parasite elements and electron spin resonance of the components. To this end, in still another embodiment, the PCB design device 100 may receive inputs for the types of components included in the electronic device, distances between the components, materials of the components, and parasite elements and electron spin resonance of the components.

In addition, the PCB design device 100 may correct the tendency of EMI generation according to the PCB pattern and component arrangement on the basis of an actually measured EMC test result. Through this, the PCB design device 100 may precisely perform the EMI simulation. At this point, the PCB design device 100 may display the EMI simulation result through the display unit 130.

The PCB design device 110 may display the EMI simulation result by varying a color according to an EMI value through the display unit 130. In detail, as the EMI value is smaller, the result is displayed in a blue color, and as the EMI value is greater, the result is displayed in a red color. In addition, the PCB design device 110 may display the EMI simulation result by varying darkness according to an EMI value through the display unit 130. Through this, the user may intuitively perceive the EMI simulation result. At this point, the PCB design device 100 may display a specific value of the EMI simulation result together through the display unit 130.

The PCB design device 100 may suggest a PCB pattern or component arrangement capable of suppressing the EMI generation on the basis of the EMI simulation result through the controller 170. In detail, when EMI having a predetermined reference value is measured, the PCB design device 100 may suggest a PCB design change capable of suppressing the EMI generation on the basis of the EMI simulation result. In a detailed embodiment, the controller 170 of the PCB design device 100 may suggest a PCB design change capable of suppressing the EMI generation on the basis of at least any one of distance adjustment between components, a PCB pattern change, a ground change, impedance of a PCB, and suggestion of another component replaceable for a currently used component. In detail, the PCB design device 100 may suggest a PCB design change through a resonance analysis of the power and ground. In addition, the PCB design device 100 may analyze impedances of a main power supply unit and portion of resonance generation to suggest the PCB design change.

For example, the PCB design device 100 may select a signal entrance in order to be less affected by interference in a switch circuit and electronic component group. In addition, the PCB design device 100 may separate both terminals of a signal line from intrinsic impedance in order to avoid a reflection line.

The PCB design device 100 receives a final input for the PCB pattern or component arrangement through the user input unit 160 (operation S511).

The PCB design device 100 generates a PCB blueprint on the basis of the PCB pattern or component arrangement through the controller 170 (operation S513).

Like this, when the PCB design device 100 simulates the EMI generation from the PCB design, the user may predict EMI that may be generated from the PCB at the time of operating an electronic device. Accordingly, dangerousness may be reduced which causes a manufactured PCB to be redesigned and remanufactured since the manufactured PCB does not satisfy the EMC test criterion. Through this, a manufacturing period and cost for the electronic device can be reduced. In addition, since the PCB design device 100 can correct a tendency of EMI generation according to a PCB pattern and component arrangement on the basis of the actually measured EMC test result, precise EMI simulation is enabled as the number of usage times of the PCB design device 100 is increased.

According to embodiments, the PCB design device enables a PCB to be efficiently designed by simulating EMI generated from the PCB.

In the foregoing, features, structures, or effects described in connection with embodiments are included in at least one embodiment, and are not necessarily limited to one embodiment. Furthermore, the exemplified features, structures, or effects in various embodiments can be combined and modified by those skilled in the art. Accordingly, contents in connection with these combination and modification should be construed to fall in the scope of the present invention.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A printed circuit board (PCB) design device (100) for designing a PCB of an electronic device, the PCB design device comprising:
a communication unit (110) transmitting and receiving circuit design information;
a user input unit (160) receiving a user input for a PCB pattern or arrangement of components included in the electronic device on the basis of the circuit design information; and
a controller (170) simulating electromagnetic interference (EMI) on the basis of the user input.

2. The PCB design device (100) according to claim 1, wherein the controller (170) suggests an EMI-suppressible design change of the PCB suppressing EMI generation on the basis of the EMI simulation result.

3. The PCB design device (100) according to claim 2, wherein the controller (170) suggests the EMI-suppressible design change of the PCB through at least any one from among a distance adjustment between components included in the electronic device, a PCB pattern change, a ground change, and suggestion of another component replaceable for a currently used component.

4. The PCB design device (100) according to claim 1 or claim 2, wherein the controller (170) performs the EMI simulation on the basis of at least any one of a gradual variation of frequency, a resonance frequency of the PCB, and a DC IR-drop.

5. The PCB (100) design device according to any one of claim 1, claim 2, and claim 4, further comprising a display unit displaying an EMI simulation result in a color varying according to an EMI value.

6. The PCB design device (100) according to any one of claim 1, claim 2, claim 4, and claim 5, wherein the controller performs the EMI simulation on the basis of a type of a component included in the electronic device, a material of the component included in the electronic device, and a parasitic element and electron spin resonance of the component included in the electronic device.

7. A method of operating a printed circuit board (PCB) design device (100) for designing a PCB of an electronic device, the method comprising:
receiving circuit design information;
receiving a user input for a PCB pattern or an arrangement of components in the electronic device on a basis of the circuit design information; and
simulating electromagnetic interference (EMI) on the basis of the user input.

8. The method according to claim 7, further comprising suggesting an EMI-suppressible design change of the PCB on the basis of an EMI simulation result.

9. The method according to claim 8, wherein the suggesting of the design change of the PCB comprises suggesting the MEI-suppressible design change of the PCB through at least any one from among a distance adjustment between components included in the electronic device, a PCB pattern change, a ground change, and suggestion of another component replaceable for a currently used component.

10. The method according to claim 7 or claim 8, wherein the simulating of the EMI comprises performing the EMI simulation on the basis of at least any one of a gradual variation of frequency, a resonance frequency of the PCB, and a DC IR-drop.

11. The method according to any one of claim 7, claim 8, and claim 10, further comprising displaying an EMI simulation result in a color varying according to an EMI value.

12. The method according to any one of claim 7, claim 8, claim 10, and claim 11, wherein the simulating of the EMI comprises performing the EMI simulation on the basis of a type of component included in the electronic device, a material of the component included in the electronic device, and a parasitic element and electronic spin resonance of the component included in the electronic device.
